# EUROPÄISCHE PATENTSCHRIFT

(11) **EP 0 484 423 B1**
(45) Veröffentlichungstag und Bekanntmachung des Hinweises auf die Patenterteilung: **21.12.1994**
(21) Anmeldenummer: 90911932.3
(22) Anmeldetag: 01.08.1990
(51) Int. Cl.: H04N 7/133, H04N 5/92

(54) **DIGITALES SIGNALVERARBEITUNGSSYSTEM**
DIGITAL SIGNAL PROCESSING SYSTEM
SYSTEME DE TRAITEMENT NUMERIQUE DES SIGNAUX

(30) Priorität: 03.08.1989 DE 3925663
(43) Veröffentlichungstag der Anmeldung: 13.05.1992
(73) Patentinhaber: Deutsche Thomson-Brandt GmbH, 78010 Villingen-Schwenningen (DE)
(72) Erfinder: KEESEN, Heinz-Werner, D-3000 Hannover 1 (DE)
(74) Vertreter: Einsel, Robert, Dipl.-Ing.
(86) Internationale Anmeldenummer: EP9001258
(87) Internationale Veröffentlichungsnummer: WO9102430

(56) Entgegenhaltungen:
- EP-A- 0 276 753
- DE-A- 2 835 434
- NL-A- 8 601 005
- US-A- 3 553 362
- US-A- 4 139 867
- US-A- 4 672 441

## Beschreibung

Die Erfindung betrifft ein digitales Signalverarbeitungssystem für abschnittsweise codierte Signale.

Bei der Übertragung und/oder Aufzeichnung und Wiedergabe von digitalen Signalen ist die Informationsdichte oft zeitlichen Schwankungen unterworfen. Dies kann sowohl für unbehandelte Signale zutreffen als auch z.B. für solche Videosignale, die zur Irrelevanz- und Redundanzreduktion mit einem Quellencoder behandelt wurden. Eine Auslegung der Übertragungsstrekke bzw. des Aufzeichnungsträgers für die maximale Informationsdichte ist technisch aufwendig und unwirtschaftlich. Bei einer Begrenzung der Übertragungs- bzw. Aufzeichnungskapazität auf eine mittlere Informationsdichte durch zeitliche Kompression und anschließende Expansion, also durch unterschiedliche Wortlänge der Datenabschnitte in Abhängigkeit der Informationsdichte, ergibt sich das Problem, die unterschiedlich langen Datenabschnitte für die Blöcke nach der Übertragung bzw. Aufzeichnung wiederzuerkennen und den Blöcken die richtige Lage für das Ausgangsbild zuzuweisen. Diese Wiedererkennung ist besonders dann schwierig, wenn Störungen die Wiedererkennungskriterien beseitigen. Es kann dann der Fall eintreten, daß auch nach Abklingen der Störung eine richtige Auswertung der nachfolgenden Datenabschnitte nicht möglich ist.

Ein ähnliches Problem entsteht, wenn z.B. in einem digitalen Videorekorder in der Betriebsart "Suchlauf" die Daten nur stückweise in kurzen Abschnitten gelesen werden können. Es soll nämlich auch in der Betriebsart "Suchlauf" ein Bild mit ausreichender Qualität aus den relativ kurzen gelesenen Datenabschnitten zu rekonstruieren sein.

Der Erfindung liegt die Aufgabe zugrunde, ein Verfahren zur digitalen Signalaufzeichnung und -wiedergabe so zu verbessern, daß auch bei der Wiedergabe abschnittsweise codierter Signale mit erhöhter Geschwindigkeit (Suchlauf) das Signal, z.B. ein Bild, mit ausreichender Qualität decodiert werden kann.

Diese Aufgabe wird durch die im Patentanspruch 1 angegebenen Merkmale gelöst. Vorteilhafte Weiterbildungen der Erfindung sind in den Unteransprüchen beschrieben.

Aus der Schrift DE-A-37 02 490 (EP-A-0 276 753) ist es bekannt, abschnittsweise erhaltene Digitalsignale abschnittsweise aufzuzeichnen und Blöcke, deren Datenabschnitte eine geringere Wortlänge als die mittlere aufweisen, mit Anteilen von Datenabschnitten von Blöcken mit einer größeren Wortlänge als die mittlere aufzufüllen.

Die aufzuzeichnenden Daten können beispielsweise aus Koeffizienten einer DCT-Transformation bestehen. DCT bedeutet: discrete cosine transform. Von z.B. jedem n x m-Bildpunktblock, z.B. n = 8 und m = 8, wird zunächst der Gleichanteil und ein oder mehrere wichtige(r) Wechselanteil(e) und eine abschließende Blockende-Kennung pro Block aufgezeichnet. Wenn die Datenabschnittslänge des codierten Blocks kleiner ist als eine mittlere Block-Datenabschnittslänge, wird der restliche zur Verfügung stehende Platz mit Wechselanteilen eines Blocks, der eine größere als die mittlere Datenabschnittslänge benötigt, und, wenn passend, mit der entsprechenden Blockende-Kennung aufgefüllt.

Durch dieses Verfahren können bei Lesefehlern während der Wiedergabe die in gleichmäßigen Abständen befindlichen Blockanfänge wiedergefunden werden.

In der Betriebsart "Suchlauf" bewegen sich die Leseköpfe beispielsweise bei einem üblichen Helical-Scan-Aufzeichnungsverfahren (Schrägspur) in einem gegenüber dem normalen Wiedergabebetrieb geänderten Winkel über die aufgezeichneten Spuren. Selbst mit einer gewissen Lesekopf-Nachführung, z.B. durch Aktuatoren, können die Spuren jeweils nur abschnittsweise gelesen werden. Die Frage ist dann, welche räumliche Lage im gesamten decodierten Signal der jeweils gelesene Abschnitt von Blöcken haben soll.

Die Lösung besteht darin, daß an bestimmten Stellen im aufzuzeichnenden Signal eine Lageinformation eingefügt wird und die zu diesen Stellen gehörenden Signalteile im decodierten Signal entsprechend der Lageinformation anzuordnen. Dafür bietet sich die Blockende-Kennung an. Wird aber zu jeder Blockende-Kennung eine Lageinformation hinzugefügt, kann die aufzuzeichnende Datenmenge deutlich ansteigen.

Eine weitere Möglichkeit besteht darin, mehrere Blöcke, z.B. acht, zu einem größeren Block, im folgenden Superblock genannt, zusammenzufassen und am Anfang oder Ende mit einer Adresse für die Lage im Bild zu versehen. Durch die Aufzeichnung einer Adresse nur für je einen Superblock wird die Datenrate nur unwesentlich erhöht und die Gesamt-Codiereffizienz gesteigert. Aus den in annähernd gleichen Zeitabständen decodierten Superblöcken wird dann das Ausgangssignal zusammengesetzt. Es ist segmentiert entsprechend der Superblock-Größe und kann eine unveränderte räumliche Auflösung haben.

Eine weitere Möglichkeit besteht darin, die aus DE-A-37 02 490 bekannte Aufzeichnungsreihenfolge der Gleich- und Wechselanteile der Transformationskoeffizenten zu ändern.

Zunächst werden am Anfang einer Spur die Gleichanteile aller Blöcke dieser Spur aufgezeichnet, nachfolgend die Spur-Adressen der wichtigen Wechselanteile der zugehörigen Blöcke, anschließend die entsprechenden Wechselanteile, nachfolgend die Spur-Adressen der weniger wichtigen Wechselanteile und diese Wechselanteile selbst. Weniger wichtige Wechselanteile sind z.B. Transformationskoeffizienten mit kleinen Amplituden. Ein solcher Spurabschnitt des Signals kann z.B. ein Segment oder zwei Segmente darstellen, d.h. im Fall eines Bildsignals kann ein Bild z.B. aus zwei Segmenten oder nur aus einem Segment bestehen.

Entsprechend einer ansteigenden Suchlaufgeschwindigkeit können zunächst
- Gleichanteile, wichtige Wechselanteile und ihre Spur-Adressen und teilweise die weniger wichtigen Wechselanteile und ihre Spur-Adressen
oder
- Gleichanteile, wichtige Wechselanteile und ihre Spur-Adressen
oder
- Gleichanteile
gelesen und decodiert werden.

Entsprechend ergibt sich bei geringer Suchlaufgeschwindigkeit eine relativ hohe Signalqualität bei z.B. voller zeitlicher und etwas reduzierter räumlicher Auflösung und bei höherer Suchlaufgeschwindigkeit eine weniger hohe Signalqualität bei z.B. voller zeitlicher und stärker reduzierter räumlicher Auflösung. Dies ist der Erwartung eines Benutzers angepaßt.

Es ist auch möglich, zwei oder mehrere der vorgenannten Möglichkeiten der Aufzeichnung zu kombinieren.

Nachstehend wird ein Ausführungsbeispiel der Erfindung anhand der Zeichnungen erläutert. Diese zeigen in
- Fig. 1: Blockdiagramm eines Videosignalverarbeitungssystems,
- Fig. 2: Spuren von digital codierten Videosignalen auf einem Magnetband mit Helical-Scan-Aufzeichnung mit einem Abtastweg der Videoköpfe bei Betriebsart "Suchlauf",
- Fig. 3: ein bekanntes Aufzeichnungsverfahren von blockweise codierten Videosignalen,
- Fig. 4: einen auf eine Spur eines Magnetbandes aufgezeichneten Superblock nach dem erfindungsgemäßen Aufzeichnungsverfahren,
- Fig. 5: die Lage von solchen Superblöcken im Bild,
- Fig. 6: die Lagen im Bild von mehreren oder allen Blökken jeweils einer Spur bei einem weiteren erfindungsgemäßen Aufzeichnungsverfahren,
- Fig. 7: die Anordnung der Signalanteile-dieses Verfahrens auf einer Spur eines Magnetbandes,
- Fig. 8: ein Blockdiagramm für eine Schaltung, die das Verfahren nach Fig. 4 und 5 benutzt,
- Fig. 9: ein Blockdiagramm für eine Schaltung, die das Verfahren nach Fig. 6 und 7 benutzt.

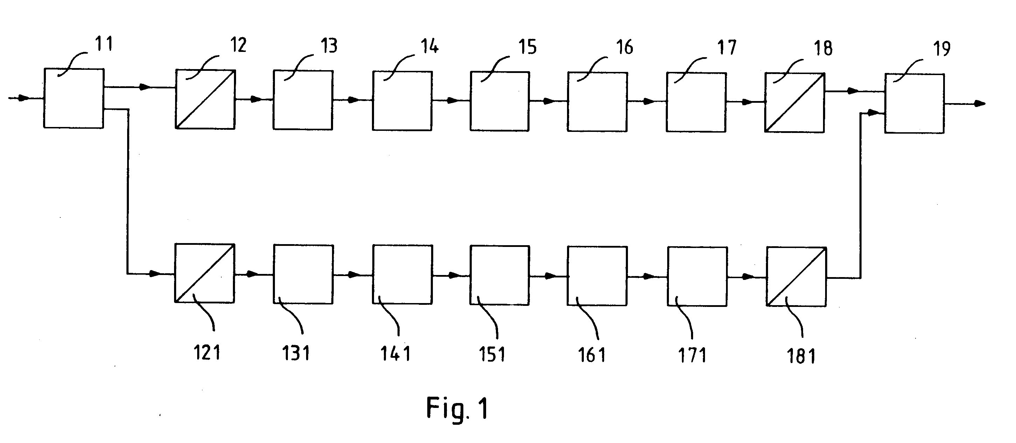

Fig. 1 zeigt ein Videosignalverarbeitungssystem, z.B. den Videosignalteil eines digitalen Videorekorders, mit einer Schaltung 11, die ein ankommendes analoges FBAS-Signal in einen Luminanzanteil und in einen Chrominanzanteil trennt.

Das Luminanzsignal wird dem A/D-Wandler 12 zugeführt, in einer Schaltung 13 z.B. zweidimensional DCT-transformiert, in einer Schaltung 14 mit einer Kanalcodierung moduliert, in einem Speicher 15, z.B. einem Magnetband, gespeichert, in einer Schaltung 16 entsprechend der Kanalcodierung demoduliert, in einer Schaltung 17 z.B. zweidimensional invers DCT-transformiert und über einen D/A-Wandler 18 mit dem entsprechenden Chrominanzsignal aus dem D/A-Wandler 181 in einer Schaltung 19 wieder zu einem analogen FBAS-Signal zusammengefügt.

Das Chrominanzsignal wird in den Schaltungen 121 bis 181 entsprechend dem Luminanzsignal in den entsprechenden Schaltungen 12 bis 18 verarbeitet.
Für einen digitalen Audiosignal-Prozessor können z.B. für einen Tonkanal die Schaltungen 12 bis 18 verwendet werden und die Schaltungen 11, 19 und 121 bis 181 entfallen.

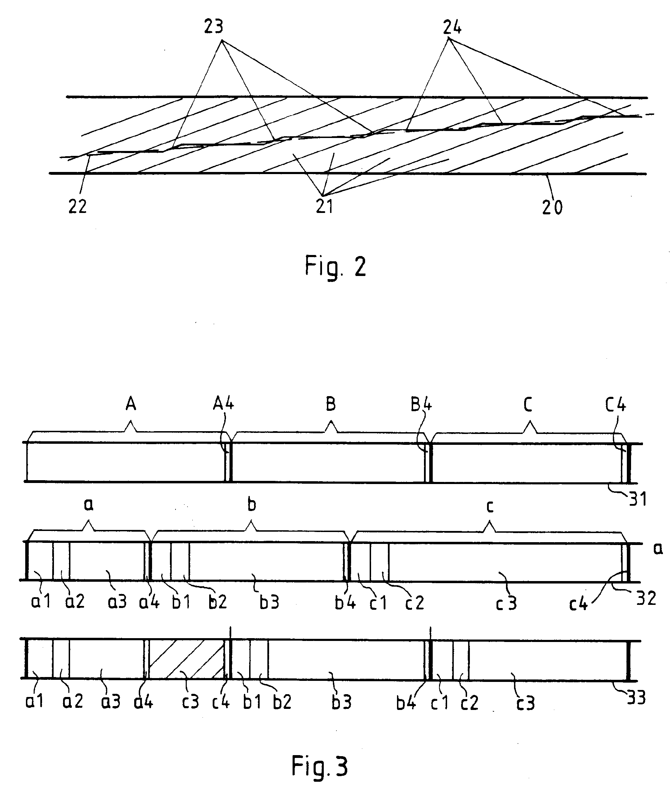

Fig. 2 zeigt ein Magnetband 20 mit aufgezeichneten Schrägspuren 21. Durch die gestrichelte Linie 22 wird die allgemeine Richtung einer Videokopfbewegung auf dem Magnetband 20 im Suchlauf angedeutet.
Dadurch, daß die Videoköpfe, die hier nicht dargestellt sind, z.B. auf Aktuatoren angeordnet sind, können sie stückweise 23 einer Spur 21 folgen und digitale Daten lesen. Zwischen diesen Datenabschnitten 23 springen 24 die Videoköpfe zur jeweils nächsten oder auch weiter entfernten Spur 21.

Fig. 3 zeigt die Anordnung von Anteilen von blockweise codierten Videosignalen auf Spuren eines Magnetbandes. Es ist ein Magnetband-Spurabschnitt 31 mit drei Daten-Blöcken A, B, C gleicher Länge mit der jeweiligen Blockende-Kennzeichnung A4, B4, C4 dargestellt.

Es ist weiter ein Spurabschnitt 32 mit drei Daten-Blöcken a, b, c unterschiedlicher Länge dargestellt. Die jeweiligen Längen entsprechen der Anzahl der Daten, die z.B. ein DCT-Coder für jeden der Blöcke a, b, c abgibt. a1, b1 und c1 sind Gleichanteile, a2, b2 und c2 sind wichtige Wechselanteile, a3, b3 und c3 sind weniger wichtige Wechselanteile, a4, b4 und c4 sind Blockende-Markierungen.
Eine Datenaufzeichnung wie auf Spurabschnitt 32 führt zu einer ungleichmäßigen Blocklänge, die beim Auftreten von Lesefehlern bei der Wiedergabe ein Auffinden von Blockanfängen erschwert.

Vorteilhaft ist eine gleichmäßige Blocklänge wie auf Spurabschnitt 31. Zu diesem Zweck wird ein Anteil der weniger wichtigen Wechselanteile c3F aus einem Block c mit einer größeren als der mittleren Datenmenge b an einem Block a mit einer kleineren als der mittleren Datenmenge b angehängt, wenn möglich mit dem entsprechenden Blockende-Kennungssignal c4, wie auf Spurabschnitt 33 dargestellt. Dieses Verfahren ist bekannt (DE-A-37 02 490), aber nicht ausreichend, um in einer Betriebsart "Suchlauf", wobei die Schrägspuren 21 des Magnetbandes 20 nur teilweise gelesen werden können, eine Information zu liefern, wo die gelesenen und decodierten Daten der Spurabschnitte 23 in dem Ausgangs-Bild eines Videorekorders anzuordnen sind, denn es ist beispielsweise nur der erste Block eines gesamten Bildes als solcher markiert.

Diese Information könnte durch eine Hinzufügung entsprechender Daten zu den Blockende-Kennungen a4, b4, c4 gegeben werden. Beispielsweise bei einer Bildgröße von 540 x 576 Bildpunkten mit einer Blockgröße von 8 x 8 Bildpunkten und einer Codierungs-Datenrate von etwa 1 Bit/Bildpunkt wären für jeden Block statt ungefähr 64 Bit dann ungefähr 77 Bit notwendig.

Um diese deutliche Erhöhung der Datenmenge zu vermeiden, kann man unter der Vorraussetzung, daß die Spurabschnitte 23 eine entsprechende Anzahl von Blöcken umfassen, mehrere, z.B. acht, Blöcke zu einem "Superblock" zusammenfassen und nur pro Superblock eine Adressinformation 401 bzw. 402 hinzufügen.

Ein Coder ist so zu regeln, daß die Daten für den letzten Block im Superblock noch im Speicherplatz für diesen Spurblock gespeichert werden können. Freibleibende Speicherplätze können mit dem Wert "null" aufgefüllt werden.

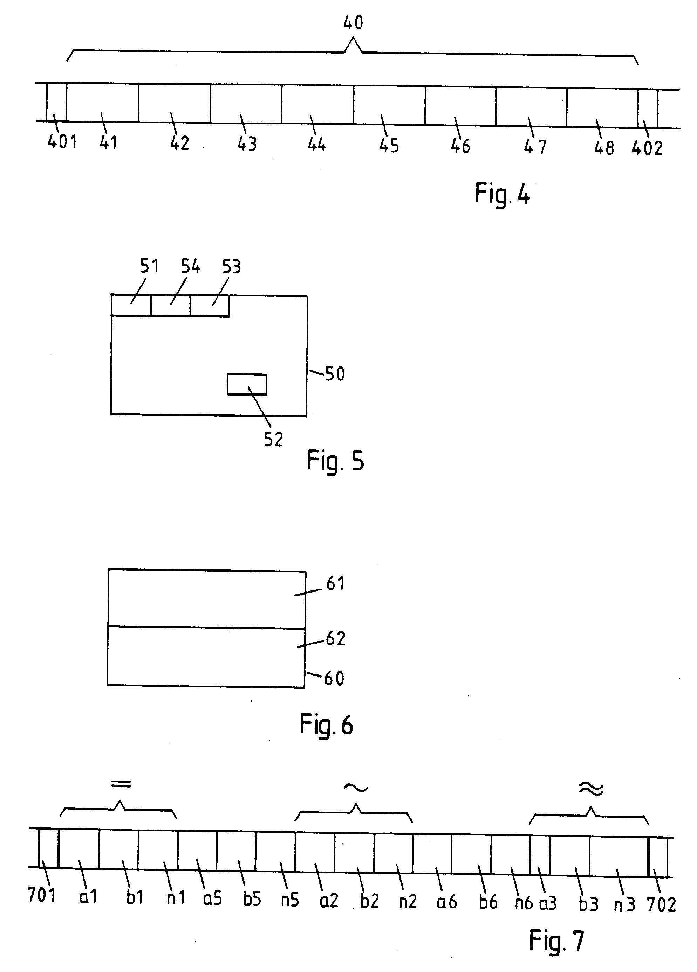

Fig. 4 zeigt eine Spur des Magnetbands mit einem solchen Superblock 40, der aus den Blöcken 41 bis 48, die solchen Blökken wie A, B, C von 31 bzw. 33 entsprechen, und aus einer Adresse 401 oder 402 besteht.

Fig. 5 zeigt die Lage von Superblöcken 51 bis 54 im Ausgangsbild 50 eines Videorekorders im Suchlauf-Betrieb. Es kann eine gute räumliche Auflösung erreicht werden. Das Bild ist stark segmentiert und hat damit eine reduzierte zeitliche Auflösung.

Fig. 6 zeigt eine geringere Segmentierung durch ein weiteres Verfahren. Es sind beispielsweise nur noch zwei Segmente 61 und 62 im gesamten Bild 60 vorhanden. Es kann auch das ganze Bild 60 aus einem Segment 60 bestehen.

Fig. 7 zeigt die entsprechende Form der Speicherung der Codierungs-Signalanteile auf einer Spur des Magnetbandes.

Zunächst werden die Gleichanteile a1, b1 und n1 an den Beginn des Speicherplatzes für das Segment 61, 62 bzw. 60 geschrieben. Es folgen die Adressen a5, b5 bis n5 der wichtigen Wechselanteile a2, b2 bis n2 sowie diese Wechselanteile selbst. Es schließen sich die Adressen a6, b6 bis n6 für die weniger wichtigen Wechselanteile a3, b3 bis n3 und diese Wechselanteile selbst an. Am Anfang oder Ende dieses gesamten Spurabschnitts kann eine Kennung 701 oder 702 für die Lage des Segmentes 61, 62 bzw. 60 im Bild 60 eingefügt werden. Zwischen den b- und den n-Anteilen, z.B. zwischen b1 und n1, sind nicht dargestellte weitere entsprechende Anteile vorhanden.

Ein Coder ist so zu regeln, daß die Daten n1 bis n6 für den letzten Block im Segment (z.B. 61, 62 bzw. 60) noch im vorgesehenen Speicherplatz für das Segment gespeichert werden können. Freibleibende Speicherplätze können mit dem Wert "null" aufgefüllt werden.

Eine segmentfreie Darstellung im Suchlauf wird z.B. dann erreicht, wenn die Gleichanteile aller Blöcke eines Bildes oder mehrerer Bilder in einer Spur des Magnetbandes gespeichert sind und die Videoköpfe beim Suchlauf mit hoher Geschwindigkeit nur einen entsprechenden Bereich der Spur abtasten können. Selbst bei dieser hohen Suchlaufgeschwindigkeit ist es dann möglich, ein Bild mit reduzierter räumlicher Auflösung zu decodieren.

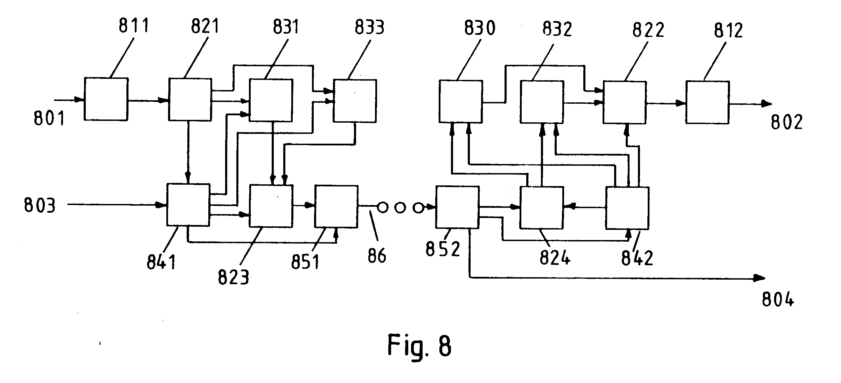

Fig. 8 zeigt für das Verfahren nach Fig. 3 bis 5 das Blockschaltbild eines Coders, der die Schaltungen 811, 821, 823, 831, 833, 841 und 851 enthält, eine Übertragungsstrecke bzw. ein Speichermedium 86 und das Blockschaltbild eines Decoders, der die Schaltungen 812, 822, 824, 830, 832, 842 und 852 enthält. Der Coder kann z.B. in der Schaltung 14 bzw. 141 enthalten sein und der Decoder in Schaltung 16 bzw. 161.

Am Eingang 801 des Coders werden z.B. blockweise DCT-codierte Bildsignale der einen Quantisierer enthaltenden Schaltung 811 zugeführt, die die Signale mit variabler Wortlänge codiert. Entsprechende Ausgangssignale a1 bis a3, b1 bis b3, c1 bis c3 werden der im wesentlichen einen Multiplexer enthaltenden Schaltung 821 zugeführt, in der sie z.B. in Gleichanteile a1, b1, c1, wichtige Wechselanteile a2, b2, c2 und weniger wichtige Wechselanteile a3, b3, c3 aufgespalten werden.

Gleichanteile a1, b1, c1 werden in einen ersten FIFO-Speicher 831 geladen und Wechselanteile a2, a3, b2, b3, c2, c3 in einen zweiten FIFO-Speicher 833. FIFO bedeutet: First in, first out.

Der Füllstand des ersten FIFO-Speichers 831 oder der Füllstand des zweiten FIFO-Speichers 833 oder eine Kombination, z.B. die Summe, der beiden Füllstände kann vorteilhaft als Regelgröße für die Quantisiererkennlinie der Schaltung 811 verwendet werden. Die Quantisiererkennlinie der Schaltung 811 und die Größe der FIFO-Speicher 831 bzw. 833 müssen so bemessen sein, daß in den FIFO-Speichern 831 bzw. 833 kein Über- oder Unterlauf auftritt.

In der Schaltung 823 werden Gleich- und Wechselanteile a1 bis a3, b1 bis b3, c1 bis c3 aus den beiden FIFO-Speichern 831 und 833 gemäß der Anordnung auf Spurabschnitt 33 in einem Demultiplexer zusammengestellt und Blockende-Markierungen a4, b4, c4 hinzugefügt und in Schaltung 851 werden mehrere Blöcke A, B, C zu je einem Superblock 40 zusammengefaßt und mit einer Superblock-Adressinformation 401 bzw. 402 und z.B. mit einer Kanalmodulation und einem Fehlerschutz versehen.
Die Steuerschaltung 841 erhält von der Schaltung 821 Signale, die die jeweilige Verarbeitung von Signalanteilen a1 bis c1 bzw. a2 bis c2 bzw. a3 bis c3 bzw. c3F anzeigen und vom Eingang 803 Signale, die die Lage des aktuellen Blocks im Signal vor der Codierung bzw. nach der Decodierung anzeigen. Die Steuerschaltung 841 liefert die jeweilige Lese- und Schreibadressierung für die FIFO-Speicher 831 und 833, steuert die Schaltung 823 mit dem Demultiplexer und der Einfügung von Blockende-Markierungen a4, b4, c4 und die Schaltung 851 bei der Zusammenfassung und Adressierung 401 bzw. 402 von Superblöcken 40.

Das Ausgangssignal der Schaltung 851 wird dann übertragen 86 bzw. gespeichert 86 und bei der Wiedergabe der Schaltung 852 im Decoder zugeführt. Dort findet z.B. die Kanalmodulation und Fehlerkorrektur und die Abtrennung von Superblock-Adressen 401 bzw. 402 statt. Superblock-Adressen 401 bzw. 402 stehen am Ausgang 804 des Decoders zur Verfügung.

In einer Schaltung 824, die im wesentlichen einen Multiplexer und einen Blockende-Markierungs-Decodierer enthält, werden Gleichanteile a1, b1, c1 bzw. Wechselanteile a2, a3, b2, b3, c2, c3, c3F aus dem Datenstrom abgetrennt und in einen dritten FIFO-Speicher 830 bzw. einen vierten FIFO-Speicher 832 geladen.

Von dort werden die entsprechenden Signalanteile in einer im wesentlichen einen Demultiplexer enthaltenden Schaltung 822 in einer Form, wie beispielsweise auf Spurabschnitt 32 dargestellt, angeordnet und in der Schaltung 812 entsprechend ihrer variablen Wortlänge decodiert. Am Ausgang 802 des Decoders stehen dann wieder Signalblöcke mit konstanter Wortlänge und ihrer zugehörigen Adresse 804 im Bild zur Verfügung, in der Betriebsart "Suchlauf" superblockweise springend.

Die Steuerschaltung 842 erhält beispielsweise Blockadressen aus Schaltung 852 und liefert damit die Lese- und Schreibadressierung für Gleichanteile a1, b1, c1 bzw. Wechselanteile a2, a3, b2, b3, c2, c3, c3F in den FIFO-Speichern 830 bzw. 832, und steuert außerdem den Multiplexer in Schaltung 824 und den Demultiplexer in Schaltung 822.

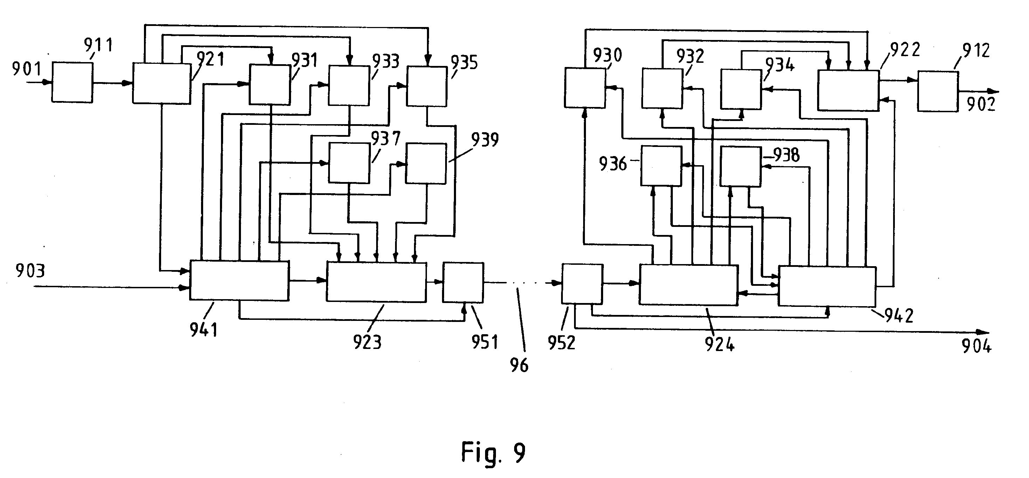

Fig. 9 zeigt für das Verfahren nach Fig. 3, 6 und 7 das Blockschaltbild eines Coders, der die Schaltungen 911, 921, 923, 931, 933, 935, 937, 939, 941 und 951 enthält, eine Übertragungsstrecke bzw. ein Speichermedium 96 und das Blockschaltbild eines Decoders, der die Schaltungen 912, 922, 924, 930, 932, 934, 936, 938, 942 und 952 enthält. Der Coder kann z.B. in der Schaltung 14 bzw. 141 enthalten sein und der Decoder in Schaltung 16 bzw. 161.

Am Eingang 901 des Coders werden z.B. blockweise DCT-codierte Bildsignale der einen Quantisierer enthaltenden Schaltung 911 zugeführt, die die Signale mit variabler Wortlänge codiert. Entsprechende Ausgangssignale a1 bis a3, b1 bis b3, c1 bis c3 werden der im wesentlichen einen Multiplexer enthaltenden Schaltung 821 zugeführt, in der sie z.B. in Gleichanteile a1, b1, c1, wichtige Wechselanteile a2, b2, c2 und weniger wichtige Wechselanteile a3, b3, c3 aufgespalten werden. Gleichanteile a1, b1 bis n1 eines Segments z.B. 61 oder Bildes 60 werden in einen ersten FIFO-Speicher 931 geladen, wichtige Wechselanteile a2, b2 bis n2 des Segments bzw. Bildes in einen zweiten FIFO-Speicher 933 und weniger wichtige Wechselanteile a3, b3 bis n3 des Segments bzw. Bildes in einen dritten FIFO-Speicher 935. Die Adressen a5, b5 bis n5 der wichtigen Wechselanteile a2, b2 bis n2 des Segments bzw. Bildes werden in einen vierten FIFO-Speicher 937 geladen und die Adressen a6, b6 bis n6 der weniger wichtigen Wechselanteile a3, b3 bis n3 des Segments bzw. Bildes in einen fünften FIFO-Speicher 939.

Der Füllstand bzw. die Füllstände eines FIFO-Speichers bzw. mehrerer FIFO-Speicher 931, 933, 935, 937, 939 bzw. die Summe der Füllstände kann bzw. können vorteilhaft als Regelgröβe für die Quantisierungskennlinie der Schaltung 911 verwendet werden. Die Quantisierungskennlinie der Schaltung 911 und die Größe der FIFO-Speicher 931, 933, 935, 937, 939 müssen so bemessen sein, daß in den FIFO-Speichern 931, 933, 935, 937, 939 kein Über- oder Unterlauf auftritt.

In der Schaltung 923 werden Gleich- und Wechsel-Anteile a1, b1 bis n1, a2, b2 bis n2, a3, b3 bis n3 und ihre Adressen a5, b5 bis n5, a6, b6 bis n6 aus den fünf FIFO-Speichern 931, 933, 935, 937, 939 gemäß der Anordnung auf dem Spurabschnitt in Fig. 7 in einem Demultiplexer zusammengestellt. In Schaltung 951 werden Segmente 61, 62 mit ihren Adressen 701 bzw. 702 im Bild 60 bzw. Bilder 60 mit ihrer Bildnummer 701 bzw. 702 gekennzeichnet und z.B. mit einer Kanalmodulation und einem Fehlerschutz versehen.

Die Steuerschaltung 941 erhält von der Schaltung 921 Signale, die die jeweilige Verarbeitung von Signalanteilen a1, b1 bis n1, a2, b2 bis n2 bzw. a3, b3 bis n3 anzeigen und vom Eingang 903 Signale, die die Lage des aktuellen Blocks im Signal vor der Codierung bzw. nach der Decodierung anzeigen. Die Steuerschaltung 941 liefert die jeweilige Lese- und Schreibadressierung für die FIFO-Speicher 931, 933, 935, 937, 939, steuert die Schaltung 923 mit dem Demultiplexer und die Schaltung 951 bei der Adressierung 701 bzw. 702 von Segmenten 61, 62 bzw. bei der Vergabe von Bildnummern 701 bzw. 702 von Bildern 60.

Das Ausgangssignal der Schaltung 951 wird dann übertragen 96 bzw. gespeichert 96 und bei der Wiedergabe der Schaltung 952 im Decoder zugeführt. Dort findet z.B. die Kanaldemodulation und Fehlerkorrektur und die Abtrennung von Segmentadressen bzw. Bildnummern 701, 702 statt. Die Segmentadressen bzw. die Bildnummern 701, 702 stehen am Ausgang 904 des Decoders zur Verfügung.

In einer Schaltung 924, die im wesentlichen einen Multiplexer und einen Adressendecodierer enthält, werden Gleichanteile a1, b1 bis n1, wichtige Wechselanteile a2, b2 bis n2 und ihre Adressen a5, b5 bis n5, weniger wichtige Wechselanteile a3, b3 bis n3 und ihre Adressen a6, b6 bis n6 aus dem Datenstrom abgetrennt und in einem sechsten 930, bzw. siebten 932, bzw. neunten 936, bzw. achten 934 bzw. zehnten 938 FIFO-Speicher geladen.

Von dort werden die entsprechenden Signalanteile in einer im wesentlichen einen Demultiplexer enthaltenden Schaltung 922 in einer Form, wie beispielsweise auf Spurabschnitt 32 dargestellt, angeordnet und in der Schaltung 912 entsprechend ihrer variablen Wortlänge decodiert. Am Ausgang 902 des Decoders stehen dann wieder Signalblöcke mit konstanter Wortlänge und ihrer zugehörigen Adresse 904 im Bild bzw. Bildnummer 904 zur Verfügung, in der Betriebsart "Suchlauf" segment- bzw. bildweise bei z.B. vor der Decodierung mit Nullen aufgefüllten weniger wichtigen Wechselanteilen a3, b3 bis n3.

Die Steuerschaltung 942 erhält beispielsweise Blockadressen aus Schaltung 952 und liefert damit die Lese- und Schreibadressen für Gleichanteile a1, b1 bis n1 bzw. wichtige Wechselanteile a2, b2 bis n2 bzw. weniger wichtige Wechselanteile a3, b3 bis n3 und ihre Adressierung in den FIFO-Speichern 930, 932, 934, 936, 938, und steuert außerdem den Multiplexer in Schaltung 924 und den Demultiplexer in Schaltung 922.

Wenn wie in Fig. 8 oder 9 eine Vorrichtung, z.B. ein Videorekorder, einen Coder und einen Decoder enthält, können Schaltungen des Coders, z.B. die FIFO-Speicher 831 und 833 bzw. 931, 933, 935, 937, 939 vorteilhaft durch den Decoder benutzt werden und dadurch entsprechende Schaltungen des Decoders, z.B. die FIFO-Speicher 830 und 832 bzw. 930, 932, 934, 936, 938 entfallen.

## Patentansprüche

1. Signalverarbeitungssystem für digitale Signale, die abschnittsweise codiert oder decodiert werden, insbesondere Bild- oder Tonsignale, wobei die codierten Signale innerhalb der Abschnitte (a,b,c in 32) eine variable Wortlänge aufweisen, die von der Informationsdichte der Signale abhängig ist, und diese abschnittsweise erhaltenen codierten Signale zunächst Blöcken (A,B,C in 31) konstanter Wortlänge zugewiesen werden, anschließend die Blöcke (a in 32), deren Abschnitte eine geringere Wortlänge als die durch diese Blöcke (A,B,C in 31) vorgegebene aufweisen, mit Anteilen (c3F in 33) von Abschnitten (c3 in 32) aufgefüllt werden, die eine größere als die durch die Blöcke (A,B,C in 31) vorgegebene Wortlänge aufweisen und daß bei der Decodierung die Abschnitte (32) wieder in ihrer ursprünglichen variablen Wortlänge aus den Blöcken konstanter Wortlänge (33) zusammengesetzt werden, **dadurch gekennzeichnet**, daß
- mehrere aufeinanderfolgende Blöcke (33) konstanter Wortlänge jeweils zu einem Superblock (40) zusammengefaßt werden und dieser mit einer Information (401 bzw. 402) versehen wird, die die entsprechende Lage (51 bis 54) des zu decodierenden Superblocks (40) innerhalb des digitalen Signals vor der abschnittsweisen Codierung angibt,
- die Summe der variablen Längen der Abschnitte innerhalb eines jeden Superblocks (40) kleiner oder gleich der Summe der konstanten Wortlängen (41 bis 48) der zusammengefaßten Blöcke des jeweiligen Superblocks (40) ist.

2. System nach Anspruch 1, **dadurch gekennzeichnet**, daß die Information (401 bzw. 402) über die Lage eines jeden Superblocks (40) im digitalen Signal jeweils vor oder nach den codierten Daten eines jeden Superblocks (40) angeordnet ist.

3. System nach Anspruch 2, **dadurch gekennzeichnet**, daß der Füllstand eines Speichers oder mehrerer Speicher (831, 833), der bzw. die in dem Signalverarbeitungssystem die codierten Abschnitte (33) zwischenspeichert bzw. zwischenspeichern, und/oder der entsprechende Füllstand innerhalb des Speicherbereichs für einen jeden Superblock (40) eine Quantisierungskennlinie bei der Codierung (811) im Coderteil des Signalverarbeitungssystems steuert.

4. System nach Anspruch 2 oder 3, **dadurch gekennzeichnet**, daß die Decodierung so ausgebildet ist, daß gespeicherte (86) Superblöcke (40) in im wesentlichen gleichen zeitlichen Abständen mit erhöhter Lese-Geschwindigkeit aus einem Speichermedium (86) decodiert und mit Hilfe der Lageinformationen (401 bzw. 402) an entsprechenden Stellen des decodierten Signals wiedergegeben werden können und daß dadurch eine segmentierte Darstellung des digitalen Signals, wie es bei Decodierung mit nicht erhöhter Lese-Geschwindigkeit gebildet werden würde, mit reduzierter zeitlicher Auflösung ermöglicht wird.

5. Signalverarbeitungssystem für digitale Signale, die abschnittsweise codiert oder decodiert werden, insbesondere Bild- oder Tonsignale, wobei die codierten Signale innerhalb der Abschnitte (32) eine variable Wortlänge aufweisen, die von der Informationsdichte der Signale abhängig ist, und aus einer-Kombination von verschiedenen Arten von Anteilen, z.B. Gleichanteilen (a1, b1 bis n1 in Fig. 7), wichtigen Wechselanteilen (a2, b2 bis n2 in Fig. 7) und weniger wichtigen Wechselanteilen (a3, b3 bis n3 in Fig. 7) bestehen, die jeweils einen der Art zugeordneten Datenabschnitt bilden, **dadurch gekennzeichnet**, daß
- eine aufeinanderfolgende Anzahl digitaler Signale zu jeweils einem Segment (61, 62) zusammengefaßt ist, wobei im Fall eines Bildsignals ein Segment (60) z.B. ein ganzes Bild (60) umfassen kann und jedes Segment (61, 62 bzw. 60) die Kombination der verschiedenen Arten von Anteilen enthält (a1, b1 bis n1, a2, b2 bis n2, a3, b3 bis n3 in Fig. 7),
- innerhalb eines jeden Segments (61, 62 bzw. 60) die Datenabschnitte jeweils einander entsprechender Arten von Anteilen zusammengefaßt werden (a1, b1 bis n1 bzw. a2, b2 bis n2 bzw. a3, b3 bis n3 in Fig. 7),
- für alle Arten (a2, b2 bis n2, a3, b3 bis n3 in Fig. 7) von Anteilen, die auf eine erste Art (a1, b1 bis n1 in Fig. 7) folgen, innerhalb eines jeden Segments (61, 62 bzw. 60) jeweils vor den zusammengefaßten Datenabschnitten einer Art die jeweiligen Adressen der Datenabschnitte dieser Art (a5, b5 bis n5 bzw. a6, b6 bis n6 in Fig.7) zusammengefaßt übertragen oder gespeichert oder ausgewertet werden,
- jedes Segment (61, 62 bzw. 60) mit einer Information (701 bzw. 702) versehen wird, die die entsprechende Lage des zu decodierenden Segments (61, 62 bzw. 60) innerhalb des digitalen Signals vor der abschnittsweisen Codierung angibt.

6. System nach Anspruch 5, **dadurch gekennzeichnet**, daß die Information (701 bzw. 702) über die Lage eines jeden Segments (61, 62 bzw. 60) im digitalen Signal jeweils vor oder nach den codierten Daten eines jeden Segments (61, 62 bzw. 60) angeordnet ist.

7. System nach Anspruch 6, **dadurch gekennzeichnet**, daß der Füllstand eines Speichers oder mehrerer Speicher (931, 933, 935, 937 939), der bzw. die in dem Signalverarbeitungssystem die Datenabschnitte der verschiedenen Arten von Anteilen zwischenspeichert bzw. zwischenspeichern (Fig. 7) und/oder der entsprechende Füllstand innerhalb des Speicherbereichs für ein jedes Segment (61, 62 bzw. 60) eine Quantisierungskennlinie bei der Codierung (911) im Coderteil des Signalverarbeitungssystems steuert.

8. System nach Anspruch 6 oder 7, **dadurch gekennzeichnet**, daß die Decodierung so ausgebildet ist, daß gespeicherte (96) Segmente (61, 62 bzw. 60) in im wesentlichen gleichen zeitlichen Abständen mit erhöhter Lese-Geschwindigkeit aus einem Speichermedium (96) decodiert und mit Hilfe der Lageinformationen (701 bzw. 702) an entsprechenden Stellen des decodierten Signals wiedergegeben werden können, und daß bei erhöhter Lese-Geschwindigkeit aus dem Speichermedium (96) eine reduzierte Zahl von Datenabschnitten von Arten von Anteilen (z.B. a1, b1 bis n1, a2, b2 bis n2 in Fig. 7) mit entsprechenden Adressen (z.B. a5, b5 bis n5 in Fig. 7) und bei weiter erhöhter Lese-Geschwindigkeit aus dem Speichermedium (96) eine nochmals reduzierte Zahl von Datenabschnitten von Arten von Anteilen (z.B. a1, b1 bis n1 in Fig. 7) mit bzw. ohne entsprechende Adressen so wiedergegeben werden kann, daß dadurch eine wenig bzw. nicht segmentierte Darstellung des digitalen Signals, wie es bei Decodierung mit nicht erhöhter Geschwindigkeit gebildet werden würde, mit reduzierter räumlicher Auflösung ermöglicht wird.

9. System nach einem oder mehreren der vorhergehenden Ansprüche, **dadurch gekennzeichnet**, daß die Informationen (401, 402 bzw. 701, 702) über die Lage (51 bis 54 bzw. 61, 62 bzw. 60) der Superblöcke bzw. der Segmente im Signal durch einen Fehlerschutz gegen Übertragungs- bzw. Aufzeichnungs- bzw. Auswertungsfehler gesichert sind.

10. Coderschaltung für ein System nach einem oder mehreren der Ansprüche 1 bis 4, versehen mit einer Codierungsschaltung (811) mit variabler Wortlänge und steuerbarer Quantisierungskennlinie, mit einem nachgeschalteten Multiplexer (821), der Gleichanteile in einen ersten FIFO-Speicher (831) und Wechselanteile in einen zweiten FIFO-Speicher (833) und entsprechende Informationen dazu in eine Steuerschaltung (841), die die FIFO-Speicher (831, 833) adressiert und zusätzlich Informationen (803) über die Lage von Superblöcken (40) im gesamten Signal erhält, lädt, wobei die Füllstände der FIFO-Speicher (831, 832) bzw. der Superblöcke (40) in den FIFO-Speichern (831, 832) die Quantisierungskennlinie steuern können, mit einem Demultiplexer (823), der von der Steuerschaltung (841) gesteuert die Gleich- und Wechselanteile aus den FIFO-Speichern (831, 832) in Blöcken gleicher Wortlänge zusammenstellt, mit einer nachgeordneten Schaltung (851), die von Steuerschaltung (841) gesteuert, jeweils mehrere solcher Blöcke (41 bis 48) zu einem Superblock (40) zusammenfaßt, mit einer Adresse (401 bzw. 402) versieht und einen Fehlerschutz bzw. eine Kanalmodulation hinzufügt.

11. Decoderschaltung für ein System nach einem oder mehreren der Ansprüche 1 bis 4, versehen mit einer Schaltung (852), die eine Kanaldemodulation bzw. eine Fehlerkorrektur durchführt und Informationen über die Lage von Signalteilen im gesamten Signal decodiert (804) und einer Steuerschaltung (842) Informationen über die im Demultiplexer (823) des Coderteils angebrachte Lage der Gleich- und Wechselanteile zuleitet, mit einem nachfolgenden Multiplexer (824), der durch die Steuerschaltung (842) gesteuert die Gleichanteile in einen dritten FIFO-Speicher (830) und die Wechselanteile in einen vierten FIFO-Speicher (832) schreibt, wobei die Adressierung der FIFO-Speicher (830, 832) von der Steuerschaltung (842) geliefert wird, mit einem den FIFO-Speichern (830, 832) nachgeschalteten Demultiplexer (822), der Gleich- und Wechselanteile wieder entsprechend der ursprünglichen Lage am Ausgang der Codierungsschaltung (811) im Coderteil anordnet und durch die Steuerschaltung (842) gesteuert wird, mit einer nachgeschalteten Decodierungsschaltung (812), die aus Signalen variabler Wortlänge Signale mit konstanter Wortlänge erzeugt, wobei die Decoderschaltung so ausgebildet ist, daß gespeicherte (86) Superblöcke (40) in im wesentlichen gleichen zeitlichen Abständen mit erhöhter Lese-Geschwindigkeit aus dem Speichermedium (86) decodiert und mit Hilfe der Lageinformationen (804) an entsprechenden Stellen des decodierten Signals so wiedergegeben werden können, daß dadurch eine segmentierte Darstellung der digitalen Signale, wie sie bei Decodierung mit nicht erhöhter Lese-Geschwindigkeit gebildet werden würden, mit reduzierter zeitlicher Auflösung ermöglicht wird.

12. Coderschaltung für ein System nach einem oder mehreren der Ansprüche 5 bis 8, versehen mit einer Codierungsschaltung (911) mit variabler Wortlänge und steuerbarer Quantisierungskennlinie, mit einem nachgeschalteten Multiplexer (921), der segmentweise (61, 62 bzw. 60) Gleichanteile (a1, b1 bis n1 in Fig. 7) in einen ersten FIFO-Speicher (931), wichtige Wechselanteile (a2, b2 bis n2 in Fig. 7) in einen zweiten FIFO-Speicher (933) und weniger wichtige Wechselanteile (a3, b3 bis n3 in Fig. 7) in einen dritten FIFO-Speicher (935) und entsprechende Informationen dazu in eine Steuerschaltung (941) lädt, die die FIFO-Speicher (931, 933, 935, 937, 939) adressiert und zusätzlich Informationen (903) über die Lage der Segmente (61, 62 bzw. 60) im gesamten Signal erhält, wobei die Steuerschaltung (941) die jeweiligen Adressen der wichtigen (a5, b5 bis n5 in Fig. 7) bzw. weniger wichtigen (a6, b6 bis n6 in Fig. 7) Wechselanteile in einen vierten FIFO-Speicher (937) bzw. fünften FIFO-Speicher (939) schreibt und die Füllstände der FIFO-Speicher 931, 933, 935, 937, 939 die Quantisierungskennlinie steuern können, mit einem Demultiplexer (923), der von der Steuerschaltung (941) gesteuert aus dem Inhalt der FIFO-Speicher 931, 933, 935, 937, 939 jeweils Segmente (61, 62 bzw. 60) des Signals mit neuer Reihenfolge der Anteile bildet, nämlich in der Reihenfolge Gleichanteile (a1, b1 bis n1 in Fig. 7), Adressen für wichtige Wechselanteile (a5, b5 bis n5 in Fig. 7), entsprechende wichtige Wechselanteile (a2, b2 bis n2 in Fig. 7), Adressen für weniger wichtige Wechselanteile (a6, b6 bis n6 in Fig. 7) und entsprechende weniger wichtige Wechselanteile (a3, b3 bis n3 in Fig. 7), mit einer nachgeordneten Schaltung (951) die von Steuerschaltung (941) gesteuert, jeweils ein Segment (61, 62 bzw. 60) mit einer Adresse (701 bzw. 702) versieht und einen Fehlerschutz bzw. eine Kanalmodulation hinzufügt.

13. Decoderschaltung für ein System nach einem.oder mehreren der Ansprüche 5 bis 8, versehen mit einer Schaltung (952), die eine Kanaldemodulation bzw. eine Fehlerkorrektur durchführt und Informationen über die Lage von Segmenten im gesamten Signal decodiert (904) und einer Steuerschaltung (942) Informationen über die im Demultiplexer (923) des Coderteils angebrachte Lage der Gleich-, wichtigen Wechsel- und weniger wichtigen Wechselanteile bzw. der Adressen der wichtigen und weniger wichtigen Wechselanteile zuleitet, mit einem nachfolgenden Multiplexer (924), der durch die Steuerschaltung (942) gesteuert die Gleichanteile (a1, b1 bis n1 in Fig. 7) in einen sechsten FIFO-Speicher (930), die wichtigen Wechselanteile (a2, b2 bis n2 in Fig. 7) in einen siebten FIFO-Speicher (932), die weniger wichtigen Wechselanteile (a3, b3 bis n3 in Fig. 7) in einen achten FIFO-Speicher (934), die Adressen (a5, b5 bis n5 in Fig. 7) der wichtigen Wechselanteile in einen neunten FIFO-Speicher (936) und die Adressen (a6, b6 bis n6 in Fig. 7) der weniger wichtigen Wechselanteile in einen zehnten FIFO-Speicher (938) schreibt, wobei die jeweilige Adressierung der FIFO-Speicher (930, 932, 934, 936, 938) von der Steuerschaltung (942) geliefert wird, mit einem den FIFO-Speichern (930, 932, 934, 936, 938) nachgeschalteten Demultiplexer (922), der die Gleich-, wichtigen Wechsel- und weniger wichtigen Wechselanteile wieder entsprechend der ursprünglichen Lage am Ausgang der Codierungsschaltung (911) im Coderteil anordnet und durch die Steuerschaltung (942) gesteuert wird, mit einer nachgeschalteten Decodierungsschaltung (912), die aus Signalen variabler Wortlänge Signale mit konstanter Wortlänge erzeugt,
wobei die Decoderschaltung so ausgebildet ist, daß gespeicherte (96) Segmente (61, 62 bzw. 60) in im wesentlichen gleichen zeitlichen Abständen mit erhöhter Lese-Geschwindigkeit aus dem Speichermedium (96) decodiert und mit Hilfe der Lageinformationen (904) an entsprechenden Stellen des decodierten Signals wiedergegeben werden können und bei leicht erhöhter Lese-Geschwindigkeit aus dem Speichermedium (96) die Gleichanteile (a1, b1 bis n1 in Fig. 7), die Adressen (a5, b5 bis n5 in Fig. 7) der wichtigen Wechselanteile und die wichtigen Wechselanteile (a2, b2 bis n2 in Fig. 7) bei zu Null gesetzten weniger wichtigen Wechselanteilen (a3, b3 bis n3 in Fig. 7) decodiert werden und bei stark erhöhter Lese-Geschwindigkeit aus dem Speichermedium (96) nur die Gleichanteile (a1, b1 bis n1 in Fig. 7) bei zu Null gesetzten wichtigen und weniger wichtigen Wechselanteilen (a2, b2 bis n2 und a3, b3 bis n3 in Fig. 7) decodiert werden und dadurch eine vergröberte Darstellung der digitalen Signale, wie sie bei Wiedergabe mit nicht erhöhter Lese-Geschwindigkeit decodiert werden würden, ermöglicht wird.

## Claims

1. Signal processing system for digital signals which are coded or decoded in segments (batch-bulk), in particular picture or sound signals, whereby the coded signals have a variable word length within the segments (a,b,c in 32) which is independent on the packing density of the signals and these coded signals received in segments are firstly allocated to blocks (A,B,C in 31) of constant word length, following that the blocks (a in 32), whose segments have a smaller word length than was predetermined by these blocks (A,B,C in 31), are filled up with components (c3F in 33) from segments (c3 in 32), which have a larger word length than was given by the blocks (A,B,C in 31) and that on decoding, the segments (32) are re-assembled in their original variable word lengths from the blocks of constant word length (33), characterised in that several successive blocks (33) of a constant word length are respectively combined into a superblock (40) and this is provided with information (401 or 402) which indicates the respective location (51 to 54) of the superblock (40) to be decoded within the digital signal before the segment-type coding, the sum of the variable lengths of the segments within every single superblock (40) is smaller than or equal to the sum of the constant word lengths (41 to 48) of the combined blocks of the respective superblock (40).

2. System according to claim 1, characterised in that the information (401 or 402) about the location of every single superblock (40) is respectively arranged in the digital signal before or after the coded data of every single superblock (40).

3. System according to claim 2, characterised in that the level of occupancy of a memory or several memories (831,833), which temporarily store(s) the coded segments (33) in the signal processing system, and/or the corresponding level within the storage area for every single superblock (40) controls a quantizer characteristic curve with the coding (811) in the coding section of the signal processing system.

4. System according to claim 2 or 3, characterised in that the decoding is designed so that stored (86) superblocks (40) are decoded from a storage medium (86) at essentially equal temporal intervals with an increased reading speed and, by means of the location information (401 or 402), can be reproduced at corresponding points of the decoded signal and that thereby, a segmented presentation of the digital signal, as it would be formed with decoding using a not increased reading speed, is rendered possible with reduced temporal resolution.

5. Signal processing system for digital signals which are coded or decoded in segments, in particular picture or sound signals, whereby the coded signals have a variable word length within the segments (32) which is dependent on the packing density of the signals and consist of a combination of several different types of components, for example, DC components (a1, b1 to n1 in Fig.7), important AC components (a2, b2 to n2 in Fig.7) and less important AC components (a3, b3 to n3 in Fig.7), which in each case form a data segment belonging to one of the types, characterised in that a successive number of digital signals is respectively combined into one segment (61, 62) whereby, in the case of a picture signal, one segment (60) can comprise, for example, a complete picture (60) and every segment (61,62 or 60) contains the combination of the different types of components (a1, b1 to n1, a2, b2 to n2, a3, b3 to n3 in Fig.7), within every single segment (61, 62 or 60), the data sections of corresponding types of components are combined (a1, b1 to n1 or a2, b2 to n2 or a3, b3 to n3 in Fig.7), for all types (a2, b2 to n2, a3, b3 to n3 in Fig.7) of components, which follow a first type (a1, b1 to n1 in Fig.7), within every single segment (61,62 or 60), the respective addresses of the data sections of one type (a5, b5 to n5 or a6, b6 to n6 in Fig.7) are transmitted or stored or evaluated in a combined way always before the data segments of this type, each segment (61,62 or 60) is provided with information (701 or 702) which indicates the respective location of the segments (61,62 or 60) to be decoded within the digital signal before the segment-type coding.

6. System according to claim 5, characterised in that the information (701 or 702) concerning the location of every single segment (61,62 or 60) is arranged in the digital signal respectively before or after the coded data of every single segment (61,62 or 60).

7. System according to claim 6, characterised in that the level of occupancy of a memory or several memories (931,933,935,937,939) which temporarily store(s) the data segments of the various types of components in the signal processing system (Fig.7) and/or the corresponding level within the storage area for each segment (61,62 or 60) controls a quantizer characteristic curve with the coding (911) in the coder section of the signal processing system.

8. System according to claim 6 or 7, characterised in that the decoding is designed in such a way that stored (96) segments (61,62 or 60) are decoded from a storage medium (96) at essentially equal temporal intervals with an increased reading speed and, by means of the location information (701 or 702), can be reproduced at corresponding points of the decoded signal, and that a reduced number of data segments of types of components (for example, a1,b1 to n1,a2,b2 to n2 in Fig.7) with corresponding addresses (for example, a5,b5 to n5 in Fig.7) can be reproduced from the storage medium (96) with an increased reading speed, and a further reduced number of data segments of types of components (for example, a1,b1 to n1 in Fig.7) with or without corresponding addresses can be reproduced from the storage medium (96) with an even higher reading speed in such a way that thereby, a little-segmented or unsegmented presentation of the digital signal, as it would be formed by decoding with a not increased speed, is rendered possible with a reduced spatial resolution.

9. System according to one or more of the preceding claims, characterised in that the information (401,402 or 701,702) concerning the position (51 to 54 or 61,62 or 60) of the superblocks or, respectively, the segments are safeguarded in the signal by an error protection against errors in transmission, recording or evaluation.

10. Coder circuit for a system according to one or more of claims 1 to 4, provided with a coding circuit (811) with variable word length and controllable quantization characteristic curve, with a following multiplexer (821), which loads DC components into a first FIFO memory (831) and AC components into a second FIFO memory (833) and corresponding information therefore into a control circuit (841) which addresses the FIFO memories (831,833) and additionally receives information (803) concerning the position of superblocks (40) in the whole signal, whereby the levels of occupancy of the FIFO memories (831,832) or, respectively the superblocks (40) in the FIFO memories (831,832) can control the quantization characteristic curve, with a demultiplexer (823) which, controlled by the control circuit (841), puts together the DC and AC components from the FIFO memories (831,832) into blocks of equal word length, with a subsequent circuit (851) which, controlled by the control circuit (841), combines always several of such blocks (41 to 48) in a superblock (40), provides them with an address (401 or 402) and adds an error control or a channel modulation.

11. Decoder circuits for a system according to one or more of claims 1 to 4, provided with a circuit (852) which carries out a channel modulation or an error control and decodes information concerning the position of signal components in the whole signal (804) and feeds information concerning the position of the DC and AC components allocated in the demultiplexer (823) of the coder section to a control circuit (42), with a subsequent multiplexer (824) which controlled by the control circuit (842), writes the DC components into a third FIFO memory (830) and the AC components into a fourth FIFO memory (832) whereby the addressing of the FIFO memories (830,832) is supplied by the control circuit (842), with a demultiplexer (822) downstream from the FIFO memories (830,832) which again arranges DC and AC components at the output of the coding circuit (811) in the coding section corresponding to the original location and which is controlled by the control circuit (842), with a downstream decoder circuit (812) which generates signals with constant word length from signals with variable word length, wherein the decoder circuit is designed so that stored (86) superblocks (40) are decoded from a storage medium (86) at essentially equal temporal intervals with an increased reading speed and, by means of the location information (804), can be reproduced at corresponding points of the decoded signal in such a way that thereby, a segmented presentation of the digital signals, as they would be formed with decoding using a not increased reading speed, is rendered possible with reduced temporal resolution.

12. Coder circuit for a system according to one or more of claims 5 to 8, provided with a coding circuit (911) with variable word length and controllable quantizer characteristic curve, with a downstream multiplexer (921) which loads, segment-wise (61,62 or 60), DC components (a1,b1 to n1 in Fig.7) into a first FIFO memory (931), important AC components (a2,b2 to n2 in Fig.7) into a second FIFO memory (933) and less important AC components (a3,b3 to n3 in Fig.7) into a third FIFO memory (935) and information corresponding to that into a control circuit (941) which addresses the FIFO memories (931,933,935,937,939) and additionally receives information (903) concerning the location of the segments (61,62 or 60) in the total signal, wherein the control circuit (941) writes the respective addresses of the important (a5,b5 to n5 in Fig.7) or less important (a6,b6 to n6 in Fig.7) AC components into a fourth FIFO memory (937) or fifth FIFO memory (939) and the levels of occupancy of the FIFO memories (931,933,935,937,939) can control the quantizer characteristic curve, with a demultiplexer (923), which, controlled by the control circuit (941), forms respectively, from the contents of the FIFO memories (931,933,935,937,939), segments (61,62 or 60) of the signal with a new sequence of components, specifically in the sequence: DC components (a1,b1 to n1 in Fig.7), addresses for important AC components (a5,b5 to n5 in Fig.7), corresponding importantly AC components (a2,b2 to n2 in Fig.7), addresses for less important AC components (a6,b6 to n6 in Fig.7) and corresponding less important AC components (a3,b3 to n3 in Fig.7), with a downstream circuit (951) which, controlled by the control circuit (941), provides a segment (61,62 or 60) each with an address (701 or 702) and adds on an error control or a channel modulation.

13. Decoder circuit for a system according to one or more of claims 5 to 8, provided with a circuit (952) which carries out a channel modulation or an error correction and decodes (904) information concerning the location of segments in the total signal and feeds information concerning the position of the DC important AC and less important AC components or the addresses of the important and less important AC components allocated in the demultiplexer (823) of the coder section to a control circuit (942), with a subsequent multiplexer (924) which, controlled by the control circuit (942), writes the DC components (a1,b1 to n1 in Fig.7) into a sixth FIFO memory (930), the important AC components (a2,b2 to n2 in Fig.7) into a seventh FIFO memory (932), the less important AC components (a3,b3 to n3 in Fig.7) into an eighth FIFO memory (934), the addresses (a5,b5 to n5 in Fig.7) of the important AC components into a ninth FIFO memory (936) and the addresses (a6,b6 to n6 in Fig.7) of the less important AC components into a tenth FIFO memory (938), wherein the respective addressing of the FIFO memories (930,932,934,936,938) is supplied by the control circuit (942), with a demultiplexer (922) downstream from the FIFO memories (930,932,934,936,938) which again arranges the DC, important AC and less important AC components at the output of the coding circuit (911) in the coder section corresponding to the original location and which is controlled by the control circuit (942), with a downstream decoding circuit (912) which generates signals with constant word length from signals with variable word length, wherein the decoder circuit is designed so that stored (96) segments (61,62 or 60) are decoded from the storage medium (96) at essentially equal temporal intervals at an increased reading speed and, by means of the location information (904), can be reproduced at corresponding points of the decoded signal and, with slightly increased reading speed, the DC components (a1,b1 to n1 in Fig.7), the addresses (a5,b5 to n5 in Fig.7), of the important AC components and the important AC components (a2,b2 to n2 in Fig.7) are decoded from the storage medium (96) with the less important AC components (a3,b3 to n3 in Fig.7) set to zero and, in case of a significantly increased reading speed, only the DC components (a1,b1 to n1 in Fig.7) are decoded from the storage medium (96) with the important and less important AC components (a2,b2 to n2 and a3,b3 to n3 in Fig.7) set to zero and that thereby, a coarser presentation of the digital signals, as they would be decoded on reproduction with a not increased reading speed, is rendered possible.

## Revendications

1. Système de traitement de signaux pour des signaux numériques qui sont codés ou décodés section par section, en particulier pour des signaux image ou son, les signaux codés présentant à l'intérieur des sections (a, b, c dans 32) une longueur de mot variable qui dépend de la densité d'information des signaux et ces signaux codés obtenus par section étant tout d'abord affectés à des blocs (A, B, C dans 31) de longueur de mot constante, les blocs (a dans 32), dont les sections présentent une longueur de mot plus petite que celle qui est prédéfinie par ces blocs (A, B, C dans 31) étant ensuite remplis avec des parties (c3F dans 33) de sections (c3 dans 32) qui présentent une longueur de mot supérieure à celle qui est prédéfinie par ces blocs (A, B, C dans 31) et que, lors du décodage, les sections (32) sont assemblées à nouveau dans leur longueur de mot variable d'origine à partir des blocs de longueur de mot constante (33), **caractérisé en ce** que
- plusieurs blocs successifs (33) de longueur de mot constante sont réunis respectivement en un superbloc (40) et celui-ci est pourvu d'une information (401 ou 402) qui indique la position correspondante (51 à 54) du superbloc à décoder (40) à l'intérieur du signal numérique avant le codage par section,
- la somme des longueurs variables des sections à l'intérieur de chacun des superblocs (40) est plus petite ou égale à la somme des longueurs de mot constantes (41 à 48) des blocs réunis du superbloc respectif (40).

2. Système selon la revendication 1, **caractérisé en ce** que l'information (401 ou 402) sur la position de chacun des superblocs (40) dans le signal numérique est disposée respectivement avant ou après les données codées de chacun des superblocs (40).

3. Système selon la revendication 2, **caractérisé en ce** que l'état de remplissage d'une mémoire ou de plusieurs mémoires (831, 833) qui mémorise(nt) temporairement les sections codées (33) dans le système de traitement de signal et/ou l'état de remplissage correspondant à l'intérieur de la zone de mémoire pour chacun des superblocs (40) commande une caractéristique de quantification lors du codage (811) dans la partie codeur du système de traitement de signal.

4. Système selon la revendication 2 ou 3, **caractérisé en ce** que le décodage est configuré de telle manière que des superblocs (40) mis en mémoire (86) peuvent être décodés d'un support de mémoire (86) avec une vitesse de lecture accrue à des intervalles dans le temps qui sont essentiellement égaux et peuvent être reproduits à l'aide des informations de position (401 ou 402) à des endroits correspondants du signal décodé et que de ce fait une représentation segmentée du signal numérique, tel qu'il serait formé lors du décodage avec une vitesse de lecture non accrue, est rendue possible avec une résolution dans le temps réduite.

5. Système de traitement de signaux pour des signaux numériques qui sont codés ou décodés par sections, en particulier des signaux image ou son, les signaux codés présentant à l'intérieur des sections (32) une longueur de mot variable qui dépend de la densité d'information des signaux et qui sont constitués par une combinaison de différents types de parties, par exemple des partie continues (a1, b1 à n1 sur la figure 7), des parties alternatives importantes (a2, b2 à n2 sur la figure 7) et des parties alternatives moins importantes (a3, b3 à n3 sur la figure 7) qui forment respectivement une section de données attribuée au type, **caractérisé en ce**
- qu'un nombre successif de signaux numériques est réuni respectivement en un segment (61, 62), un segment (60) pouvant, par exemple, comprendre dans le cas d'un signal image une image entière (60) et chaque segment (61, 62 ou 60) contenant la combinaison des différents types de parties (a1, b1 à n1, a2, b2 à n2, a3, b3 à n3 sur la figure 7),
- à l'intérieur d'un même segment (61, 62 ou 60) les sections de données de types de parties qui correspondent les uns aux autres (a1, b1 à n1 ou a2, b2 à n2 ou a3, b3 à n3 sur la figure 7) sont réunies,
- pour tous les types (a2, b2 à n2, a3, b3 à n3 sur la figure 7) de parties qui suivent un premier type (a1, b1 à n1 sur la figure 7), à l'intérieur d'un même segment (61, 62 ou 60) les adresses respectives des sections de données réunies d'un type (a5, b5 à n5 ou a6, b6 à n6 sur la figure 7) sont, en étant réunies, transmises ou mises en mémoire ou évaluées respectivement devant les sections de données réunies de ce type,
- chaque segment (61, 62 ou 60) est pourvu d'une information (701, 702) qui indique la position correspondante du segment à décoder (61, 62 ou 60) à l'intérieur du signal numérique avant le codage par sections.

6. Système selon la revendication 5, **caractérisé en ce** que l'information (701 ou 702) sur la position de chacun des segments (61, 62 ou 60) dans le signal numérique est disposé respectivement avant ou après les données codées de chacun des segments (61, 62 ou 60).

7. Système selon la revendication 6, **caractérisé en ce** que l'état de remplissage d'une mémoire ou de plusieurs mémoires (931, 933, 935, 937, 939) qui mémorise(nt) temporairement (fig. 7) les sections de données des différents types de parties dans le système de traitement de signal et/ou l'état de remplissage correspondant à l'intérieur de la zone de mémoire pour chacun des segments (61, 62 ou 60) commande une caractéristique de quantification lors du codage (911) dans la partie codeur du système de traitement de signal.

8. Système selon la revendication 6 ou 7, **caractérisé en ce** que le décodage est configuré de telle manière que des segments (61, 62 ou 60) mémorisés (96) peuvent être décodés d'un support de mémoire (96) avec une vitesse de lecture accrue à des intervalles dans le temps substantiellement égaux et reproduits à l'aide des informations de position (701 ou 702) à des endroits correspondants du signal décodé et que, pour une vitesse de lecture accrue un nombre réduit de sections de données de types de parties (par exemple a1, b1 à n1, a2, b2 à n2 sur la figure 7) peut être reproduit à partir du support de mémoire (96) avec des adresses correspondantes (par exemple a5, b5 à n5 sur la figure 7) et que, pour une vitesse de lecture encore accrue, un nombre encore plus réduit de sections de données de types de parties (par exemple a1, b1 à n1 sur la figure 7) peut être reproduit à partir du support de mémoire (96) avec ou sans adresses correspondantes de telle manière que de ce fait une représentation peu ou pas segmentée du signal numérique, tel qu'il serait formé lors du décodage avec une vitesse non accrue, est rendue possible avec une résolution dans l'espace réduite.

9. Système selon l'une ou plusieurs des revendications précédentes, **caractérisé en ce** que les informations (401, 402 ou 701, 702) sur la position (51 à 54 ou 61, 62 ou 60) des superblocs ou des segments dans le signal sont protégées par un dispositif de protection contre les erreurs contre les erreurs de transmission et/ou d'enregistrement et/ou d'évaluation.

10. Circuit de codage pour un système selon l'une ou plusieurs des revendications 1 à 4, pourvu d'un circuit de codage (811) avec longueur de mot variable et caractéristique de quantification pouvant être commandée, d'un multiplexeur (821) placé à la suite qui charge des parties continues dans une première mémoire premier entré premier sorti (831) et des parties alternatives dans une seconde mémoire premier entré premier sorti (833) et des informations correspondantes à celles-ci dans un circuit de commande (841) qui adresse les mémoires premier entré premier sorti (831, 833) et qui reçoit en plus des informations (803) sur la position de superblocs (40) dans l'ensemble du signal, les états de remplissage (40) des mémoires premier entré premier sorti (831, 832) ou des superblocs (40) dans les mémoires premier entré premier sorti (831, 832) pouvant commander la caractéristique de quantification, d'un démultiplexeur (823) qui, commandé par le circuit de commande (841), rassemble les parties continues et alternatives des mémoires premier entré premier sorti (831, 832) dans des blocs de même longueur de mot, d'un circuit placé à la suite (851) qui, commandé par le circuit de commande (841), réunit respectivement plusieurs de ces blocs (41 à 48) en un superbloc (40), les pourvoit d'une adresse (401 ou 402) et ajoute en plus une protection contre les erreurs et/ou une modulation de canal.

11. Circuit de décodeur pour un système selon l'une ou plusieurs des revendications 1 à 4, pourvu d'un circuit (852) qui effectue une démodulation de canal ou une correction d'erreurs et décode (804) des informations sur la position de parties de signal dans l'ensemble du signal et qui amène à un circuit de commande (842) des informations sur la position des parties continues et alternatives fixée dans le démultiplexeur (823) de la partie codeur, d'un multiplexeur qui suit (824) qui, commandé par le circuit de commande (842), enregistre les parties continues dans une troisième mémoire premier entré premier sorti (830) et les parties alternatives dans une quatrième mémoire premier entré premier sorti (832), l'adressage des mémoires premier entré premier sorti (830, 832) étant délivré par le circuit de commande (842), et d'un démultiplexeur (822) placé en aval des mémoires premier entré premier sorti (830, 832) qui place des parties continues et des parties alternatives à nouveau conformément à la position d'origine à la sortie du circuit de codage (811) dans la partie codeur et qui est commandé par le circuit de commande (842), d'un circuit de décodage placé en aval (812) qui produit, à partir des signaux de longueur de mot variable, des signaux de longueur de mot constante, le circuit décodeur étant configuré de telle manière que des superblocs (40) mis en mémoire (86) peuvent être décodés du support de mémoire (86) avec une vitesse de lecture accrue à des intervalles dans le temps qui sont essentiellement égaux et peuvent être reproduits à l'aide des informations de position (804) à des endroits correspondants du signal décodé et que de ce fait une représentation segmentée des signaux numériques, tel qu'ils seraient formés lors du décodage avec une vitesse de lecture non accrue, est rendue possible avec une résolution dans le temps réduite.

12. Circuit codeur pour un système selon l'une ou plusieurs des revendications 5 à 8, pourvu d'un circuit de codage (911) avec longueur de mot variable et caractéristique de quantification qui peut être commandée, d'un multiplexeur placé en aval (921) qui charge par segments (61, 62 ou 60) des parties continues (a1, b1 à n1 sur la figure 7) dans une première mémoire premier entré premier sorti (931), des parties alternatives importantes (a2, b2 à n2 sur la figure 7) dans une seconde mémoire premier entré premier sorti (933) et des parties alternatives moins importantes (a3, b3 à n3 sur la figure 7) dans une troisième mémoire premier entré premier sorti (935) et des informations correspondantes à cela dans un circuit de commande (941) qui adresse les mémoires premier entré premier sorti (931, 933, 935, 937, 939) et qui reçoit en plus des informations (903) sur la position des segments (61, 62 ou 60) dans l'ensemble du signal, le circuit de commande (941) enregistrant les adresses respectives des parties alternatives importantes (a5, b5 à n5 sur la figure 7) ou des parties alternatives moins importantes (a6, b6 à n6 sur la figure 7) dans une quatrième mémoire premier entré premier sorti (937) ou une cinquième mémoire premier entré premier sorti (939) et les états de remplissage des mémoires premier entré premier sorti 931, 933, 935, 937, 939 pouvant commander la caractéristique de quantification, d'un démultiplexeur (923) qui, commandé par le circuit de commande (941) forme à partir du contenu des mémoires premier entré premier sorti 931, 933, 935, 937, 939 respectivement des segments (61, 62 ou 60) du signal avec un nouvel ordre des parties, à savoir dans l'ordre des parties continues (a1, b1 à n1 sur la figure 7), des adresses pour des parties alternatives importantes (a5, b5 à n5 sur la figure 7), des parties alternatives importantes correspondantes (a2, b2 à n2 sur la figure 7), des adresses pour des parties alternatives moins importantes (a6, b6 à n6 sur la figure 7) et des parties alternatives moins importantes correspondantes (a3, b3 à n3 sur la figure 7), d'un circuit placé en aval (951) qui, commandé par le circuit de commande (941), pourvoit respectivement un segment (61, 62 ou 60) d'une adresse (701 ou 702) et qui ajoute une protection contre les erreurs ou une modulation de canal.

13. Circuit décodeur pour un système selon l'une ou plusieurs des revendications 5 à 8, pourvu d'un circuit (952) qui effectue une démodulation de canal ou une correction d'erreurs et décode (904) des informations sur la position de segments dans l'ensemble du signal et qui amène à un circuit de commande (942) des informations sur la position des parties continues, des parties alternatives importantes et des parties alternatives moins importantes fixée dans le démultiplexeur (923) de la partie codeur ou des adresses des parties alternatives importantes et moins importantes, d'un multiplexeur qui suit (924) qui, commandé par le circuit de commande (942), enregistre les parties continues (a1, b1 à n1 sur la figure 7) dans une sixième mémoire premier entré premier sorti (930), les parties alternatives importantes (a2, b2 à n2 sur la figure 7) dans une septième mémoire premier entré premier sorti (932), les parties alternatives moins importantes (a3, b3 à n3 sur la figure 7) dans une huitième mémoire premier entré premier sorti (934), les adresses (a5, b5 à n5 sur la figure 7) des parties alternatives importantes dans une neuvième mémoire premier entré premier sorti (936) et les adresses (a6, b6 à n6 sur la figure 7) des parties alternatives moins importantes dans une dixième mémoire premier entré premier sorti (938), l'adressage respectif des mémoires premier entré premier sorti (930, 932, 934, 936, 938) étant délivré par le circuit de commande (942) et d'un démultiplexeur (922) placé en aval des mémoires premier entré premier sorti (930, 932, 934, 936, 938) qui place les parties continues, les parties alternatives importantes et les parties alternatives moins importantes à nouveau conformément à la position d'origine à la sortie du circuit de codage (911) dans la partie codeur et qui est commandé par le circuit de commande (942), d'un circuit de décodage placé en aval (912) qui produit, à partir des signaux de longueur de mot variable, des signaux de longueur de mot constante,
le circuit décodeur étant configuré de telle manière que des segments (61, 62 ou 60) mis en mémoire (96) peuvent être décodés du support de mémoire (96) avec une vitesse de lecture accrue à des intervalles dans le temps qui sont essentiellement égaux et peuvent être reproduits à l'aide des informations de position (904) à des endroits correspondants du signal décodé et que, pour une vitesse de lecture légèrement accrue, les parties continues (a1, b1 à n1 sur la figure 7), les adresses (a5, b5 à n5 sur la figure 7) des parties alternatives importantes et les parties alternatives importantes (a2, b2 à n2 sur la figure 7) sont décodées à partir du support de mémoire (96), les parties alternatives moins importantes (a3, b3 à n3 sur la figure 7) étant mises à zéro et que, pour une vitesse de lecture fortement accrue, seules les parties continues (a1, b1 à n1 sur la figure 7) sont décodées du support de mémoire (96), les parties alternatives importantes et moins importantes (a2, b2 à n2 et a3, b3 à n3 sur la figure 7) étant mises à zéro et de ce fait une représentation plus grossière des signaux numériques, tel qu'ils seraient décodés lors de la reproduction avec une vitesse de lecture non accrue, est rendue possible.
